# EUROPÄISCHE PATENTSCHRIFT

(11) **EP 2 499 361 B1**
(45) Veröffentlichungstag und Bekanntmachung des Hinweises auf die Patenterteilung: **21.10.2015**
(21) Anmeldenummer: 10779309.3
(22) Anmeldetag: 15.11.2010
(51) Int. Cl.: F03D 11/02, F16H 1/28

(54) **WINDTURBINE**
WIND TURBINE
TURBINE ÉOLIENNE

(30) Priorität: 13.11.2009 DE 102009052809; 20.11.2009 DE 102009053757
(43) Veröffentlichungstag der Anmeldung: 19.09.2012
(73) Patentinhaber: Suzlon Energy GmbH, 18057 Rostock (DE)
(72) Erfinder: WINKELMANN, Joerg, 18299 Wardow (DE)
(86) Internationale Anmeldenummer: PCT/EP2010/067517
(87) Internationale Veröffentlichungsnummer: WO 2011/058184

(56) Entgegenhaltungen:
- EP-A1- 1 855 001
- EP-A2- 1 045 140
- WO-A1-01/59296
- WO-A1-2007/082970
- DE-A1- 2 341 250
- DE-A1- 4 402 184
- DE-B3-102004 030 929

## Beschreibung

Die Erfindung betrifft eine Windturbine mit einem Rotor, wobei der Rotor auf einer im Wesentlichen horizontalen Rotorachse drehbar um eine Drehachse gelagert ist. Der Rotor umfasst eine Nabe und daran befestigte, vorzugsweise drei, Rotorblätter. Die Rotorblätter sind günstiger Weise, aber nicht zwingend, um ihre Längsachse drehbar an der Nabe gelagert, wodurch der Anstellwinkel der Rotorblätter veränderbar ist. Die Nabe ist direkt oder über ein Verbindungsbauteil auf der Rotorachse drehbar angebracht, wobei die Rotorachse wiederum fest mit einem Maschinenträger der Windturbine verbunden ist. Der Maschinenträger nimmt das Maschinenhaus und die darin vorhandenen Bauteile auf. Zudem ist der Maschinenträger über das sogenannte Azimutlager drehbar auf einem Turm der Windturbine angeordnet. Der Rotor ist drehfest mit Abtriebsmitteln, wie zum Beispiel einem Getriebe oder einem Generator, verbunden.

Eine solche Windturbine ist aus der DE 10 2004 064 007 A1 bekannt, wobei die als Großgroßgenerator ausgebildeten Abtriebsmittel direkt von einem Rotor ohne zwischengelagertes Getriebe angetrieben werden. Um den Luftspalt im Großgenerator möglichst konstant zu halten, muss der gesamte Triebstrang und die Lagerung äußerst steif gestaltet werden, um nur geringste Verformungen des den Triebstrang und den Großgenerator umfassenden Systems zu vermeiden. Dies führt zu einer aufwändigen, sehr schweren und teuren Konstruktion der Windturbine.

Aus der chinesischen Offenlegungsschrift CN 101255849 A ist eine Windturbine mit den eingangs aufgeführten Merkmalen bekannt. Dabei sind die Abtriebsmittel als ein Hohlrad ausgebildet, welches im Wirkeingriff mit kleineren Zahnrädern steht, welche wiederum mit je einem Generator verbunden sind. Auch hier ergibt obige Problematik, dass das Gesamtsystem äußerst steif, ergo schwer und teuer gestaltet sein muss. Denn die Geometrie des Eingriffs der Zahnflanken des Hohlrades und der kleineren Zahnräder muss möglichst konstant gehalten werden, um Reibung und Verschleiß gering zuhalten.

Weitere Beispiele aus dem Stand der Technik sind aus DE102004030929, WO2007082970, WO0159296 und EP1045140 bekannt.

Es ist eine Aufgabe der Erfindung, eine Windturbine bereitzustellen, welche die Nachteile des Stands der Technik vermeidet, wobei insbesondere eine einfache, leichte und günstige Konstruktion des Triebstrangs ermöglicht werden soll.

Die Aufgabe wird mit den Merkmalen des Hauptanspruchs 1 gelöst, wobei zwischen den Abtriebsmitteln und dem Rotor entkoppelnde Verbindungsmittel wirksam angeordnet sind. Diese haben die Wirkung, dass von dem Rotor nur noch Umfangskräfte bzw. ein Drehmoment auf die Abtriebsmittel übertragen werden können. Ansonsten sind Rotor und Abtriebsmittel hinsichtlich der Übertragung von translatorischen Bewegungen, insbesondere von Radial-, Axial- oder Kippbewegungen, in einem gewissen Bereich, im Wesentlichen entkoppelt. Die Rotationsbewegung des Rotors, d. h. die Bewegung in Umfangsrichtung zählt in diesem Zusammenhang nicht zu den oben erwähnten translatorischen Bewegungen. Orts- und Richtungsangaben wie Axial-, Radial- und Tangentialrichtung beziehen sich auf die Drehachse des Rotors.

Wenn nun beispielsweise der Rotor durch böige und turbulente Winde derart beaufschlagt wird, dass die Rotorachse sich biegt bzw. die Nabe eine translatorische und/oder Kippbewegung ausführt, so verhindern die Verbindungsmittel, dass diese Verschiebungen auf die Abtriebsmittel übertragen werden.

Eine Ausführung der Erfindung lehrt, dass die Abtriebsmittel direkt über ein Lager auf der Rotorachse drehbar gelagert sind. Wenn dazu noch der Rotor über mindestens ein Lager in unabhängiger Weise von den Abtriebsmittel auf der Rotorachse gelagert ist, so ist die Wirkung der Entkopplung besonders gut, da die getrennte Lagerung von Abtriebsmittel und Rotor eine Übertragung störender Radial-, Axial- oder Kippbewegung sehr effektiv verhindert.

Denkbar ist aber auch, dass der Rotor zumindest teilweise über die Abtriebsmittel auf der Rotorachse gelagert ist. In diesem Fall stützt sich der Rotor, zumindest teilweise, über die entkoppelnden Verbindungsmittel und über die Abtriebsmittel auf der Rotorachse ab. Auf diese Weise kann ein Lager eingespart werden.

Wenn die Abtriebsmittel als ein Teil eines Getriebes, zum Beispiel als Hohlrad oder als drehbarer Planetenträger, ausgeführt sind, wird so ein Verschleiß oder die Zerstörung des Getriebes verhindert.

Die Erfindung umfasst unter anderem, dass das Getriebe zur Übersetzung der Rotordrehzahl ein Hohlrad, mindestens zwei Planetenräder und ein Sonnenrad umfasst. Da das Sonnenrad mit einer Abtriebswelle verbunden ist, kann die übersetzte Drehzahl in eine Arbeitsmaschine, wie zum Beispiel in einen Generator, eingekoppelt werden. Der Rotor ist drehfest mit dem Hohlrad verbunden, wobei insbesondere der Rotor und das Hohlrad gemeinsam oder separat auf der Rotorachse gelagert sind. Das Hohlrad steht im Wirkeingriff mit den Planetenrädern, welche wiederum mit dem Sonnenrad zusammenwirken. Die Erfindung umfasst dabei, dass die Planetenräder direkt oder indirekt mit dem Sonnenrad im Wirkeingriff stehen. Beim direkten Wirkeingriff entspricht das Getriebe von der Bauweise her einem klassischen Planentengetriebe.

Vorteilhafter Weise umfasst das Getriebe drei oder vier Planetenräder, denn dadurch wird bewirkt, dass das Hohlrad verbessert über die Planetenräder abgestützt ist, d. h. dass Radial- und Tangentialkräfte auf einen Planetenträger übertragen wird. Zudem werden auch das Sonnenrad und die Abtriebswelle durch die Planetenräder in Radialrichtung abgestützt.

Eine Ausführung der Erfindung offenbart, dass der Planetenträger drehfest bezüglich des Maschinenträgers bzw. der Rotorachse in der Windturbine angeordnet ist.

Ein weiterer Aspekt der Erfindung ist, dass zwischen der Rotorachse und dem Maschinenträger Verbindungsstellen zur Kraftübertragung vorgesehen sind, wobei die Anzahl der wirksamen Verbindungsstellen mindestens gleich der Anzahl der Planetenräder ist. Denkbar - aber nicht zwingend - ist ebenfalls, dass die Planetenräder in einem Übergangsbereich der Rotorachse zu den Verbindungsstellen gelagert sind, das heißt, dass der Planetenträger direkt mit der Rotorachse ausgebildet ist, vorzugsweise als integrales Bauteil. Um ein optimales Getriebeverhalten zu erreichen, sind das Hohlrad, die Planetenräder und das Sonnenrad als Zahnräder ausgebildet.

Unabhängig von den obigen Merkmalsdetails zur Ausführung der Abtriebsmittel als Getriebe, umfasst die Erfindung auch, dass die Abtriebsmittel als Stator oder Rotor eines Generators ausgebildet sind. Insbesondere kann dabei zwischen dem Generator und dem Rotor kein Getriebe zur Übersetzung der Drehgeschwindigkeit vorgesehen sein. Hier stellt sich der Vorteil ein, dass Verschiebungen oder ein Kippen des Rotors nicht auf den Generator übertragen werden, und somit der Luftspalt im Generator im Wesentlichen konstant bleibt, und damit sehr gering konzipiert sein kann. Dies führt zu einer Erhöhung des Wirkungsgrades des Generators und zu einer Verringerung des Gewichts der Windturbine, da der Triebstrang und die Lagerung weniger steif konzipiert sein können.

Im Rahmen der Erfindung wird nicht auf die voran beschriebenen Ausführungen beschränkt offenbart, dass die Verbindungsmittel elastisch wirkende oder flexible Bauteilkomponenten oder Baugruppen derart umfassen, dass diese translatorische und kippende Bewegungen zwischen dem Rotor und den Abtriebsmitteln in sich aufnehmen und kompensieren können.

Denkbar ist beispielsweise, die Verbindungsmittel als mindestens eine Strebe auszubilden. Diese Streben sind an ihren Enden beweglich mit der Nabe derart verbunden und an einem anderen Ende mit den Abtriebsmitteln derart verbunden, dass Umfangskräfte durch Zug oder Druck zwischen der Nabe und den Abtriebsmitteln übertragbar sind, aber Radial-, Axial- und/oder Kippbewegungen der Nabe durch ein Auslenken der Strebe an Nabe und/oder an den Abtriebsmitteln kompensiert werden.

Die Streben können stangenförmig ausgeprägt sein und die Verbindungsmittel können weitere Dämpfungsmittel umfassen, die zwischen der Strebe und der Nabe und/oder zwischen der Strebe und den Abtriebsmitteln wirksam angeordnet sind. Dabei können zwischen der Strebe und der Nabe bzw. den Abtriebsmitteln Kugel- und/oder Stangengelenke vorgesehen sein, die Elastomerelemente aufweisen, um die Auslenkung zu ermöglichen und dabei auch dämpfend zu wirken.

Eine weitere Ausführungsform der Erfindung führt an, dass Nabe und die Abtriebsmittel jeweils eine korrespondierende Abstützfläche aufweisen, wobei die Abstützflächen zu einem Teil in Axialrichtung und/oder in Radialrichtung verlaufen und sich in Umfangsrichtung derart hinterschneiden, so dass die Abstützflächen geeignet sind, Umfangskräfte zwischen Nabe und den Abtriebsmitteln zu übertragen. Insbesondere ist die entkoppelnde Wirkung besonders effektiv, wenn die Abstützflächen im Wesentlichen in Axialrichtung und/oder in Radialrichtung verlaufen. Bei dieser Ausführungsform ermöglicht es die axiale Ausprägung der Abstützflächen, dass ein Formschluss zwischen Nabe und Abtriebsmittel bereit gestellt wird, der im Wesentlichen nur in Umfangsrichtung wirksam ist. Somit sind Radial-, Axial- und/oder Kippbewegungen der Nabe zumindest nicht formschlüssig übertragbar, sondern es wird eine relative Bewegungsmöglichkeit der Nabe zu den Abtriebsmitteln bewusst ermöglicht.

Vorzugsweise sind elastische Bauteilkomponenten zwischen den Abstützflächen angeordnet, wodurch die Übertragung der Umfangskräfte verbessert wird. Diese Ausbildung ist besonders einfach und gleichzeitig hoch effektiv, da sehr wenige Bauteile verwendet werden.

Die Übertragung der Umfangskräfte bzw. des Drehmoments ist besonders vorteilhaft, wenn mindestens zwei, bevorzugt drei Verbindungsmittel vorgesehen sind, die vorzugsweise gleichmäßig über den Umfang verteilt zwischen dem Rotor und den Abtriebsmitteln vorgesehen sind.

Dabei können die Verbindungsmittel insbesondere als Buchse mit einem Elastomerkörper und einem Bolzen ausgebildet sind. Dabei ist der Bolzen in den Elastomerkörper eingebettet, wodurch dem Bolzen ein gewisses Spiel ermöglicht wird. Im Rahmen dieses Spiels können die Verbindungsmittel Relativbewegungen zwischen dem Rotor und den Abtriebsmitteln in sich aufnehmen. Zudem haben dabei die Verbindungsmittel einen dämpfenden und ausgleichenden Effekt hinsichtlich des Drehmomenteintrags und Drehmomentübertrags in die Abtriebsmittel.

Beispielsweise ist ein den Elastomerkörper umfassender Teil der Buchse dabei direkt in der Nabe oder einem daran vorgesehenen Zusatzbauteil angeordnet. In diesem Fall ist der Bolzen direkt dem Abtriebsmittel oder in einem daran vorgesehenen Zusatzbauteil, wie einer Getriebe- oder Generatorglocke befestigt. Denkbar ist auch eine umgekehrte Anordnung der Verbindungsmittel.

Weitere Einzelheiten der Erfindung gehen aus den Zeichnungen anhand der Beschreibung hervor.

In den Zeichnungen zeigt
Fig. 1 eine exemplarische Windturbine,
Fig. 2 eine ersten Ausführungsform der Windturbine,
Fig. 3 einen Schnitt A-A durch die Ausführungsform gemäß Fig. 2 und 9,
Fig. 4 einen Schnitt C-C durch die Ausführungsform gemäß Fig. 2,
Fig. 5 einen detaillierten Längsschnitt durch die Ausführungsform gemäß Fig. 2,
Fig. 6 eine zweite Ausführungsform der Windturbine,
Fig. 7 einen Schnitt B-B durch die Ausführungsform gemäß Fig. 6,
Fig. 8 einen detaillierten Längsschnitt durch die Ausführungsform gemäß Fig. 6,
Fig. 9 eine dritte Ausführungsform der Windturbine,
Fig. 10 eine perspektivische Ansicht auf die Nabe gemäß Fig. 9,
Fig. 11 eine perspektivische Ansicht auf die Rotorachse gemäß Fig. 9,
Fig. 12 einen Schnitt D-D durch die Ausführungsform gemäß Fig. 9, und
Fig. 13 einen Schnitt durch die weitere Ausführungsform der Verbindungsmittel.

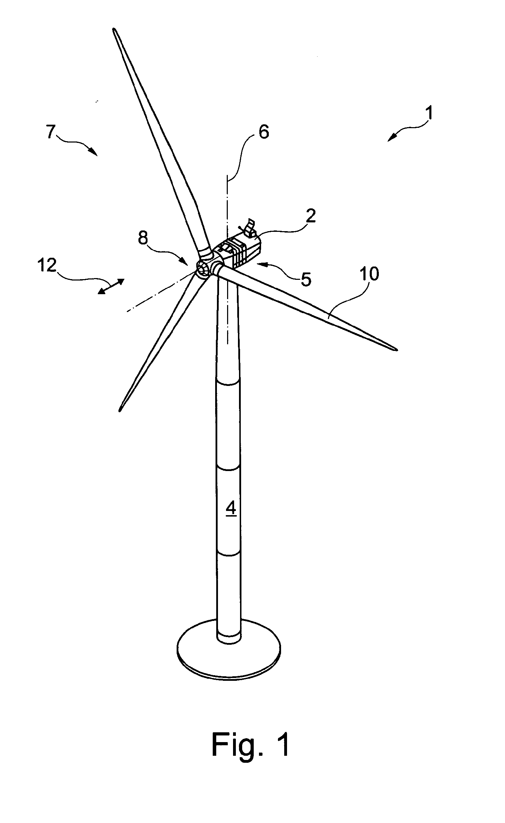

Um den Kontext der Erfindung deutlich zu machen, wird in Fig. 1 eine exemplarische Windturbine 1 gezeigt. Diese umfasst einen Turm 4, ein Maschinenhaus 2 und einen Rotor 7, wobei das Maschinenhaus 2 mittels eines Azimutlagers 5 um eine im Wesentlichen vertikale Achse 6 drehbar auf dem Turm 4 gelagert ist, um eine Windnachführung zu ermöglichen. An dem Maschinenhaus 2 ist der Rotor 7 drehbar angeordnet, welcher eine Nabe 8 umfasst, an der wiederum vorzugweise drei Rotorblätter 10 angeordnet sind. Der Rotor 7 ist über die Rotorachse 11 auf dem Maschinenträger 3 gelagert und treibt einen Generator 32 zur Erzeugung von elektrischem Strom an.

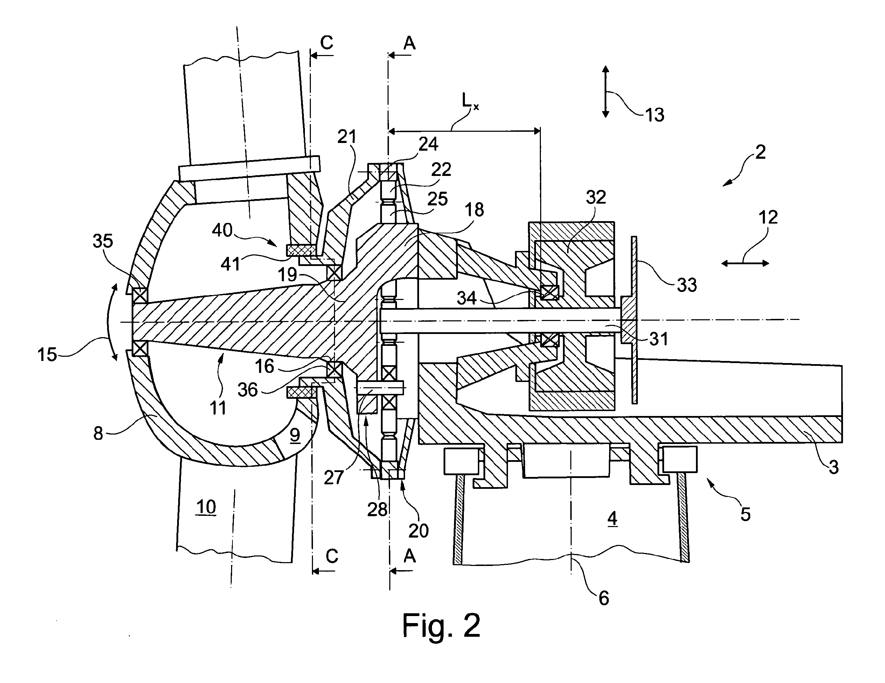

Fig. 2 zeigt eine erste Ausführungsform der Windturbine 1. Die im Folgenden beschriebenen Details treffen jedoch im Wesentlichen auf die anderen Ausführungsformen zu. In Fig. 2 ist vornehmlich das Maschinenhaus 2, die Rotorachse 11, das Getriebe 20 und der Rotor 7 dargestellt. Ein Maschinenträger 3 in dem Maschinenhaus 2 ist mit dem Azimutlager 5 verbunden, wodurch das Maschinenhaus 2 über das Azimutlager 5 um die Achse 4 drehbar auf dem Turm 4 der Windturbine 1 gelagert ist. Die vorzugweise zapfenförmige Rotorachse 11 ist drehfest über Verbindungsstellen 18 wiederum an dem Maschinenträger 3 angeordnet, wobei die Rotorachse 11 und die Verbindungsstellen 18 einstückig ausgebildet sein können. Die Nabe 8 ist drehbar auf der Rotorachse 11 gelagert, die im Wesentlichen horizontal verläuft. Die Nabe 8 umfasst eine Zugangsöffnung 9, um im Wartungsfall den Zugang für Monteure in die Nabe 8 zu ermöglichen. Zur Orientierung werden bezüglich dieser Drehachse bzw. der Rotorachse 11 des Rotors 7 eine Axialrichtung 12, eine Radialrichtung 13 und eine Umfangsrichtung 14, auch gültig für die folgenden Ausführungsbeispiele, definiert.

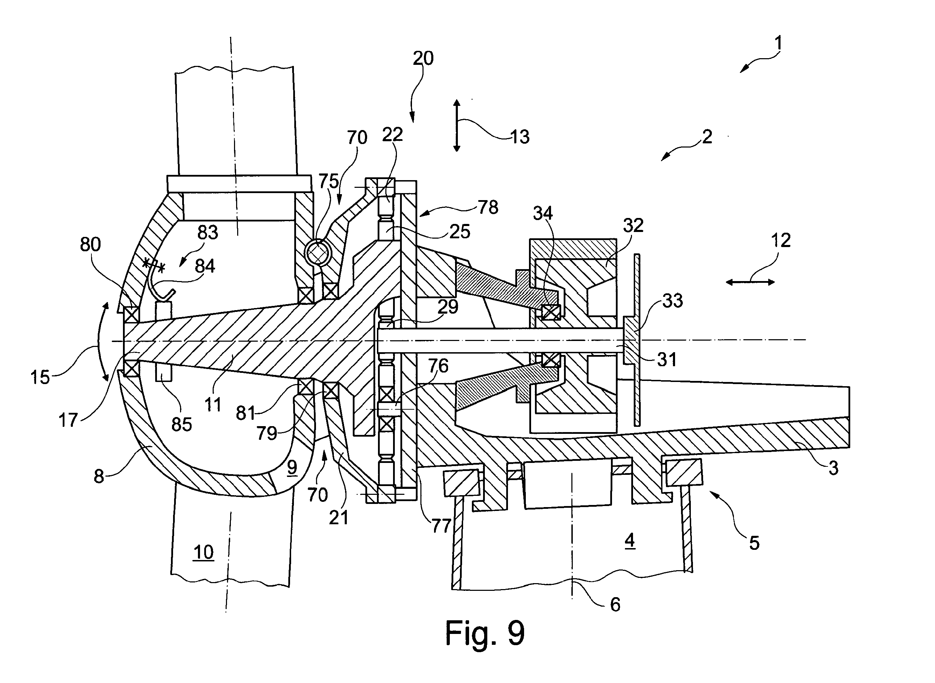

Die Nabe 8 des Rotors 7 ist über entkoppelnde Verbindungsmittel 40 oder auch 60, 70, 90 über eine Getriebeglocke 21 drehfest mit einem Hohlrad 22 eines Getriebes 20 verbunden, wobei die Getriebeglocke 21 und das Hohlrad 22 einstückig ausgebildet sein können. Somit vollzieht das Hohlrad 22 die gleiche Rotation wie der Rotor 7. Die Rotationsbewegung des Hohlrads 22 wird weiter auf Planetenräder 25 übertragen, die mittels Lagerzapfen 27 drehbar in einem Planetenträger 28 gelagert sind. Der Planetenträger 28 ist drehfest bezüglich des Maschinenträgers 3 vorgesehen, insbesondere kann der Planetenträger 28 gemäß Fig. 2 durch einen Übergangsbereich 19 der Rotorachse 11 zu den Verbindungsstellen 18, gemäß Fig. 9 über einen separaten Planententräger 78 oder gemäß einer weiteren nicht dargestellten Ausführungsform direkt von dem Maschinenträger gebildet sein. In bestimmtem Maße wird so das Hohlrad 22 über die Planetenräder 25 an dem Maschinenträger 3 abgestützt.

In den vorliegenden Ausführungsbeispielen sind jeweils drei Planetenräder 25 vorgesehen, wobei dies nicht limitierend auf die Erfindung wirken soll, vielmehr sind auch vier, fünf oder sechs Planetenräder denkbar.

Das Hohlrad 22 ist mit dem Gehäuse 24 und der Getriebeglocke 21 verbunden und bildet eine Baueinheit, die über die Verbindungsmittel 40 drehfest mit der Nabe 8 verbunden ist und sich folglich mit dem Rotor 7 mitdreht. Die anfängliche Drehbewegung des Rotors 7 wird über das Hohlrad 22 auf die Planetenräder 25 übertragen und - nun mit höherer Drehzahl - auf das Sonnenrad 29 im Zentrum des Getriebes 20 übertragen. Das Sonnenrad 29 ist mit einer Abtriebswelle 31 verbunden, welche die Rotation mit mittelschneller, hochgesetzter Drehzahl an einen Generator 32 zur Erzeugung von elektrischem Strom weiterleitet. Die Abtriebswelle 31 ist vorzugweise mit einer Bremsscheibe 33 versehen, wobei eine nicht dargestellte Bremsvorrichtung diese zum mechanischen Abbremsen des Triebstrangs beaufschlagen kann.

Die Abtriebswelle 31 ist entweder direkt in dem Maschinenträger und/oder über ein gemeinsames Lager 34 mit dem Generator 32 an dem Maschinenträger 3 gelagert. Das gemeinsame Lager 34 von Generator 32 und Abtriebswelle 31 ist besonders einfach und günstig hinsichtlich der Herstellung und Montage der Windturbine 1. Dieses kombinierte Lager 34 kann hier besonders gut angewendet werden, da die drei oder mehreren Planetenräder 25 auch eine in Radialrichtung 13 wirksame Lagerung darstellen, wodurch auf ein weiteres, dem Sonnerad 29 nahe Lager verzichtet werden kann. Zwischen dem Lager 34 der Abtriebswelle 31 und dem Sonnenrad 29 ist ein Axialversatz Lx vorhanden. Indem sich die Abtriebswelle 31 leicht elastisch verformen kann, ist das Sonnenrad 29 in der Lage, in bedingtem Maße eine radiale Bewegung zwischen den Planetenrädern 25 auszuführen und somit eine ähnliche Belastungssituation zwischen den Planetenrädern 25 zu gewährleisten. Dies verringert den Verschleiß der Planetenräder 25 und des Sonnenrads 29.

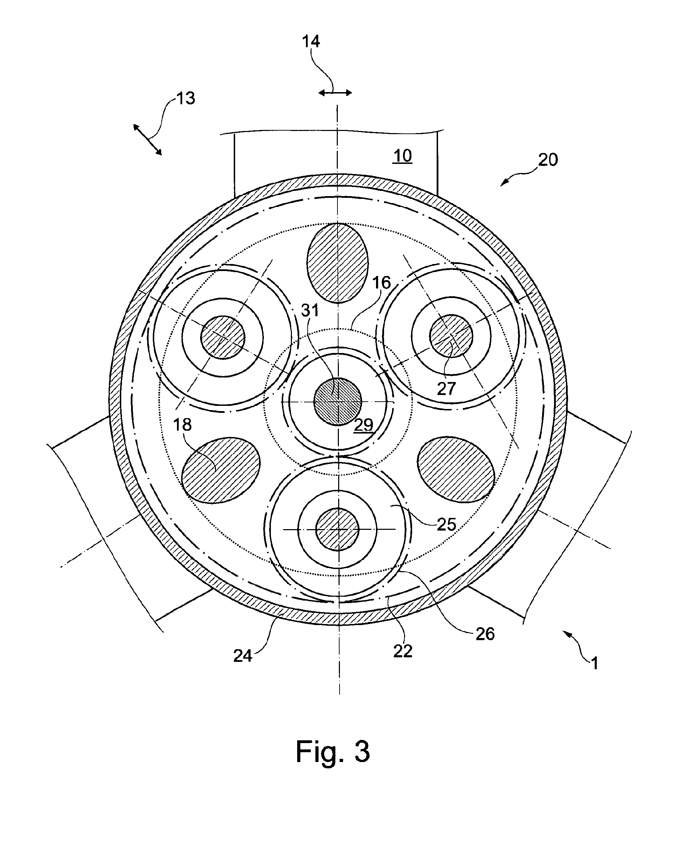

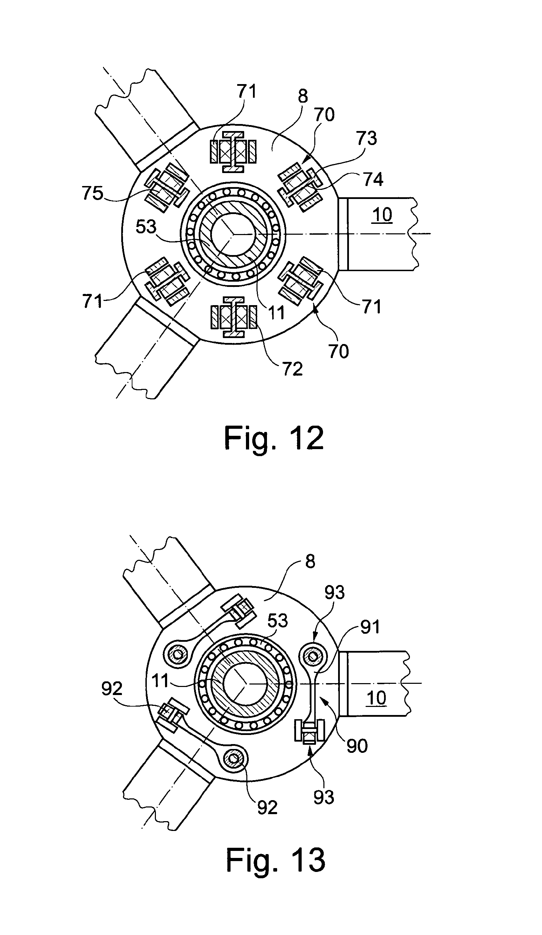

Fig. 3 zeigt einen vereinfachten Schnitt durch das Getriebe 20 entlang der Linie A-A gemäß Fig. 2. Da sich die vorliegenden Ausführungsformen hinsichtlich des Getriebes 20 nicht wesentlich unterscheiden, gilt dies auch für die Ausführungsform gemäß Fig. 9 oder Fig. 13.

In Fig. 3 ist angrenzend an die ansatzweise dargestellten Rotorblätter 9 das Gehäuse 24 des Hohlrades 22 erkennbar, wobei das Hohlrad 22 nur anhand des Mittelkreises der die Verzahnung 23 repräsentierenden Strich-Punkt-Linie 23 gezeigt ist. Das Gehäuse kann einstückig mit dem Hohlrad ausgebildet sein. Denkbar ist jedoch auch, das Hohlrad 22 als Vollring in das Gehäuse 24 einzuschrumpfen oder segmentweise in das Gehäuse 24 via Form- oder Reibschluss einzubringen.

Radial weiter innen ist eine Punkt-Linie 19 zu erkennen, welche den Übergangsbereichs 19 zwischen der Rotorachse 11 und den drei Verbindungsstellen 18 repräsentiert. Dieser Übergangsbereich 19 dient im Ausführungsbeispiel nach Fig. 2 als Aufnahme für die Lagerzapfen 27 und folglich als Planetenträger 28. Die Rotorachse 11 zur Lagerung der Nabe 8 und des Hohlrads 22, der als Planetenträger 28 ausgebildete Übergangsbereich 19, und die Verbindungsstellen 18 zur Befestigung an dem Maschinenträger 3 bilden dann eine einstückige Baueinheit, die zum Beispiel als Guss hergestellt werden kann. Es kann jedoch auch günstig hinsichtlich der Montage und Herstellung sein, diese Baueinheit aus mehreren Teilen wie herzustellen.

Die Planetenräder 25 greifen in die Verzahnung 23 des Hohlrades 22, und die Verzahnung 30 des Sonnenrads 29 ein, wobei die Verzahnung 26 der Planetenräder 25 als Strich-Punkt-Linie 25 (Mittelkreis) dargestellt ist. Radial weiter innen ist eine weitere Punkt-Linie 16 zu erkennen, welche die Rotorachse 11 bzw. die Lauffläche 16 des Lagers 36 der Getriebeglocke 21 auf der Rotorachse 11 repräsentiert.

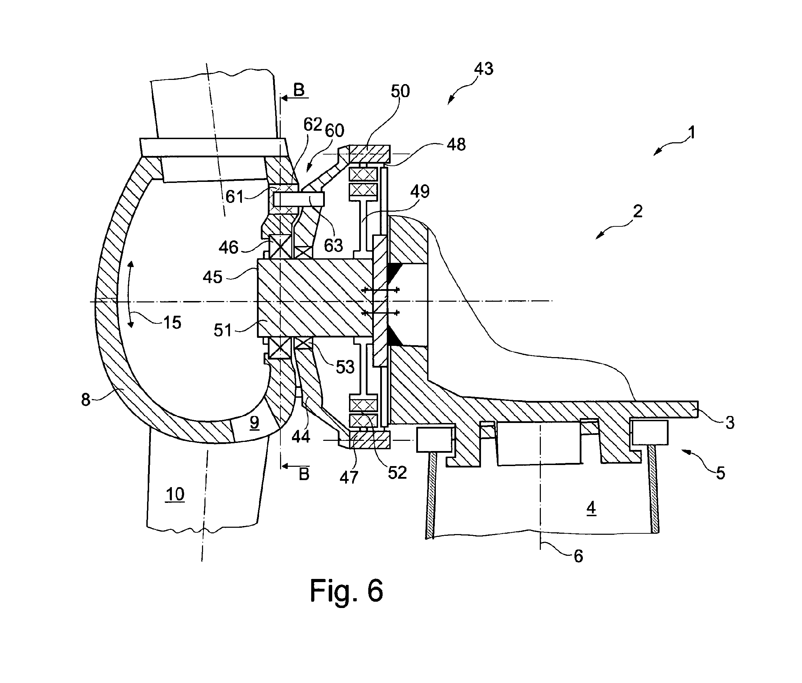

Die voran stehenden Ausführungen gelten im Wesentlichen für alle Windturbinen 1 gemäß Fig. 2, 9, 13 und hinsichtlich der Lagerung und Entkopplung der Nabe 8 auch für die Ausführung gemäß Fig. 6, wobei hier die Abtriebsmittel nicht als Getriebeglocke, sondern als Generatorglocke 44 ausgebildet sind. Im Folgenden werden nun die wesentlichen Unterschiede der vorliegenden Ausführungsbeispiele angeführt - diese Unterschiede betreffen die Lagerung der Nabe auf der Rotorachse, die Ausbildung des Planetenträgers bzw. die Verwendung eines Getriebes und die Verbindungsmittel zwischen den Abtriebsmitteln 20, 21, 43, 44 und der Nabe 8. Die in den folgenden Ausführungsbeispielen offenbarten Merkmalsunterschiede sind nicht an die jeweilige Ausführungsform gebunden und sollen nicht limitierend auf die Erfindung wirken, vielmehr sind auch die Merkmale der unterschiedlichen Ausführungen miteinander sinnvoll kombinierbar. Insbesondere können die unterschiedlichen Formen der direkten oder indirekten Lagerung der Nabe auf der Rotorachse oder die verschiedenen Kopplungsarten der Drehverbindungen zwischen Nabe und den unterschiedlichen Ausprägungen der Abtriebsmittel als Getriebe mit unterschiedlichen Planetenträgern kombiniert werden. Es ist zu unterstreichen, dass sich diese Ausprägungen nicht zwingend auf eine Windturbine 1 wie voran stehend beziehen müssen, sondern auch Windturbinen 1 betreffen können, die zum Beispiel anstatt des Getriebes und des Hohlrads direkt einen Großgenerator 43 gemäß Fig. 6 aufweisen. In Verbindung mit der voran beschriebenen Windturbine 1 zeigen sich die folgenden Ausprägungen besonders vorteilhaft.

In Fig. 2 ist die Nabe 8 über ein direktes Lager 35 an der Spitze 17 der Rotorachse 11 und indirekt über ein Lager 36 der Getriebeglocke 21 des Hohlrades 22 auf der Lauffläche 16 der Rotorachse 11 gelagert. Da die Nabe 8 zusammen mit der Spitze 17 biegungsbedingt eine Bewegung 15 vollführen kann, diese jedoch nicht auf das Hohlrad 22 übertragen werden darf, sind zwischen der Nabe 8 und der Getriebeglocke 21 entkoppelnde und/oder dämpfende Verbindungsmittel 20 vorgesehen. Diese ermöglichen, dass zwischen Nabe 8 und Getriebeglocke 21 bzw. Hohlrad 22 eine im Wesentlichen drehfeste Verbindung etabliert wird, jedoch keine wesentlichen Axial-, Radial- oder Kippbewegungen 15 übertragen werden können. Solche Bewegungen 15 würden dazu führen, dass der Eingriff des Hohlrads 22 und der Planetenräder 25 sehr unregelmäßig und veränderlich wäre, wodurch es zu einem sehr hohen Verschleiß der Verzahnung 23 und 26 oder zur Zerstörung der Zahnräder kommen würde. Die Ausführung in Fig. 2 bedingt, dass die Verbindungsmittel 20 die Nabe 8 und die Getriebeglocke 21 nicht hinsichtlich Bewegungen 15 in Radialrichtung 13 entkoppeln. Denn die Nabe 8 ist über das Lager 36 der Getriebeglocke 21 bzw. des Hohlrads 22 in kombinierter Weise abgestützt, wobei die Radialabstützung unabdingbar ist. Die Verbindungsmittel 20 können auch Drehschwingungen dämpfen.

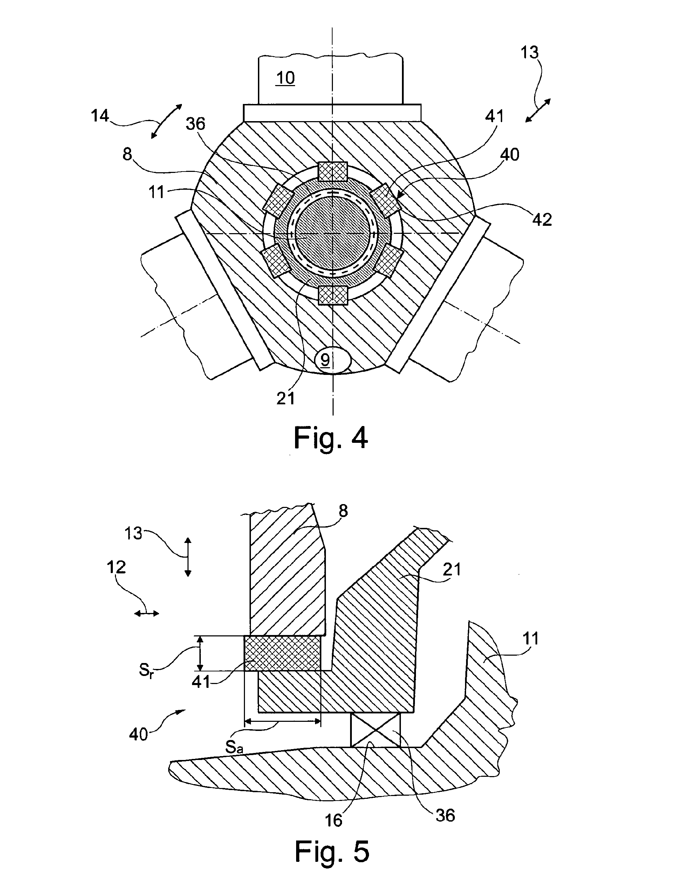

Anhand des Schnitts C-C (Fig. 4) und Fig. 5 werden die entkoppelnden Verbindungsmittel 20 gemäß Fig. 2 im Detail dargestellt. Dieses Konzept ist auch in einer Windturbine 1 ohne Getriebe und/oder mit einem Momentenlager 46 und Achsstumpf 45 (Fig. 6) oder in einer Windturbine 1 mit Mehrfachlagerung der Nabe 8 (Fig. 9) einsetzbar. Dabei sind die Verbindungsmittel 20 als ein oder mehrere Elastomerkörper 41 ausgebildet, die direkt zwischen der Getriebeglocke 21 und der Nabe 8 - ähnlich einer Welle-Nabe-Verbindung mit mehreren Passfedern-angeordnet sind. Dazu sind in der Nabe 8 und in der Getriebeglocke 21 Nuten 42 über den Umfang verteilt vorgesehen, in welchen die Elastomerkörper 41 form- oder reibschlüssig angeordnet sind. Um eine größere Kompensationsfähigkeit des Elastomerkörpers 21 in Axialrichtung 12 als in Radialrichtung 13 zu ermöglichen, ist vorzugweise die axiale Stärke Sₐ des Elastomerkörpers 41 größer ist als dessen radiale Stärke Sᵣ. Vorzugsweise weist der Elastomerkörper eine hohe Steifigkeit in Radialrichtung 13 und in Umfangsrichtung 14, aber eine sehr geringe Steifigkeit bzw. eine hohe Elastizität in Axialrichtung 12 auf. So wäre die Abstützung in Radialrichtung 13 und die Kraftübertragung in Umfangsrichtung 14 direkt und verlässlich sein, die Kompensationsfähigkeit in Axialrichtung 12 für Bewegungen 15 trotzdem hoch.

Das Ausführungsbeispiel gemäß Fig. 6 weist eine Rotorachse 51 auf, welche als Achsstumpf 45 ohne Spitze ausgebildet ist. Anstatt dessen ist der Rotor 7 über die Nabe 8 über ein sogenanntes Momentenlager 46 auf dem Achsstumpf 45 gelagert. Dies führt zu einer Reduzierung des Gewichts der Rotorachse 51 und vergrößert gleichzeitig den Bauraum innerhalb der Nabe 8, um hier Antriebskomponenten für die Verstellung des Anstellwinkels der Rotorblätter 9 unterzubringen. Dieses Lagerkonzept ist auch in den Ausführungen einer Windturbine mit einem Getriebe 20 gemäß Fig. 2, 9 und 13 denkbar.

In Fig. 6 weist die Windturbine 1 anstatt eines Getriebes einen Großgenerator 43 mit einer Generatorglocke 44 mit einem Generatorgehäuse 47 und Dichtungsmitteln 48 auf. Hierbei ist der Stator 50 des Generators 43 fest mit dem Gehäuse 47 bzw. der Generatorglocke 44 verbunden und vollzieht somit die Rotation des Rotors 7. Ein Generatorrotor 49 ist fest mit dem Achsstumpf 45 verbunden. Da die Generatorglocke 44 über ein eigenes Lager 53 auf der Rotorachse 51 gelagert ist und somit auch der Stator 50 vom Rotor 7 entkoppelt sind, wird der Luftspalt 52 zwischen dem Stator 50 und dem Generatorrotor 49 durch axiale, radiale oder kippende Bewegungen 15 des Rotors 7 nicht wesentlich beeinflusst. Denkbar, aber nicht dargestellt, ist auch, dass der Rotor 7 einen, z. B. auf der Rotorachse drehbar gelagerten, Generatorrotor antreibt, welcher von einem radial außen liegenden oder einem, axial versetzt angeordneten, feststehenden Stator umgriffen wird.

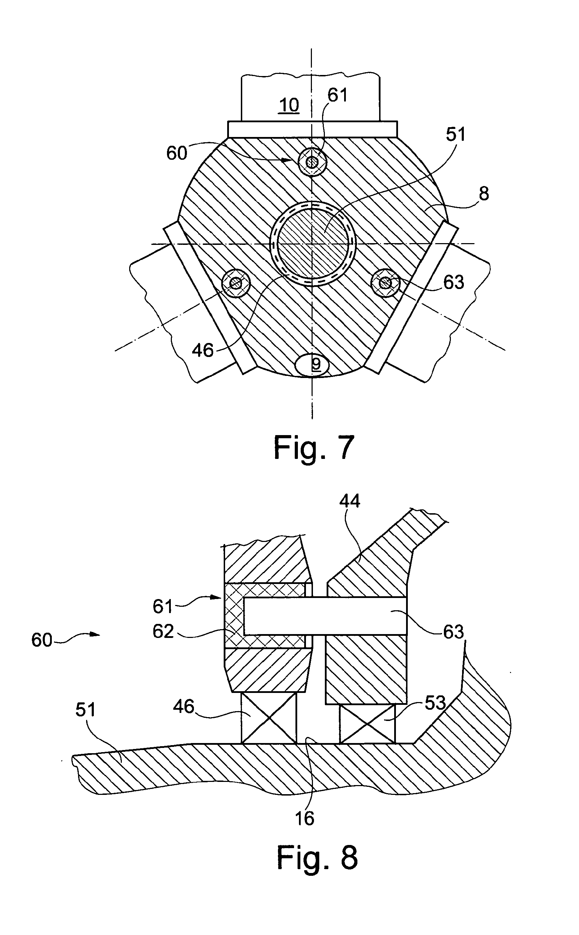

Die Verbindungsmittel 60 gemäß Fig. 6, 7 und 8 sind zum Beispiel als Buchse 61 auszuführen, wobei ein Elastomerkörper 62 in oder an der Nabe 8 oder in der Getriebeglocke (nicht dargestellt) angeordnet ist. Der Elastomerkörper 62 nimmt wiederum ein Bolzen 63 auf der fest in den als Generatorglocke 44 ausgebildeten Abtriebsmitteln oder in der Nabe (nicht dargestellt) angeordnet ist. Dabei ist die Buchse 61 derart ausgebildet, dass der Bolzen 63 in Axialrichtung 12 und/oder in Radialrichtung13 relativ flexibel gelagert ist, jedoch nicht in Umfangsrichtung 14. Anhand Fig. 8 wird deutlich, dass dazu die axiale Stärke Sₐ des Elastomerkörpers 40 größer ist als dessen radiale Stärke Sᵣ. Vorzugsweise sind mindestens drei solche Buchsen 61 zwischen Nabe 8 und Getriebeglocke oder der Generatorglocke 44 vorgesehen.

Anhand Fig. 9 wird eine weitere Ausführungsform der Erfindung eingeführt, wobei die Nabe 8 mittels zwei direkter, separater Lager 80, 81 auf der Rotorachse 11 abgestützt ist. Günstiger Weise ist eines der Lager 80, 81 als Festlager und eines als Loslager ausgeführt. Die Getriebeglocke 21 bzw. das Hohlrad 22 verfügen über ein eigenes unabhängiges Lager 79 zur Abstützung auf der Rotorachse 11. Zwischen der Nabe 8 und dem Hohlrad 22 sind nun hinsichtlich Axial- und Radialbewegungen 15 entkoppelnde Verbindungsmittel 70 angeordnet.

Gemäß Fig. 9, 10, 11 und 12 sind die Verbindungsmittel 70 derart ausgebildet, dass die Nabe 8 und die Abtriebsmittel, z. B. die Getriebeglocke 21, sich in Axialrichtung 12 überschneidende, aber in Umfangsrichtung 14 versetzte Abstützmittel 71 und 73 aufweisen. An den Abstützmitteln 71 der Nabe 8 und den Abstützmitteln 73 der Getriebeglocke 21 sind jeweils korrespondierende Abstützflächen 72 und 74 vorgesehen. Diese Abstützflächen 72, 74 verlaufen im Wesentlichen in Axialrichtung 12 und Radialrichtung 13, wobei sie, in montiertem Zustand des Rotors 7, sich in Umfangsrichtung 14 derart hintergreifen, so dass die Verbindungsmittel 70 über die Abstützflächen 72 und 74 geeignet sind, Umfangskräfte zwischen der Nabe 8 und der Getriebeglocke 21 zu übertragen. Diese Ausführungsform ermöglicht es, einen Formschluss zwischen Nabe 8 und Abtriebsmitteln, hier Getriebeglocke 21, herzustellen, der im Wesentlichen nur in Umfangsrichtung 14 wirksam ist. Somit sind Radial-, Axial- und/oder Kippbewegungen 15 der Nabe 8 zumindest nicht formschlüssig übertragbar, sondern es wird eine relative Bewegungsmöglichkeit der Nabe 8 zu der Getriebeglocke 21 bewusst ermöglicht.

Zwischen diesen Abstützflächen 72, 74 der Nabe 8 und der Getriebeglocke 21 sind vorzugsweise Elastomerkörper 75 vorgesehen, die zwar Umfangskräfte von der Nabe 8 auf die Getriebeglocke 21, und umgekehrt, übertragen, aber eine axiale und radiale Verschiebung Nabe 8 und der Getriebeglocke 21 zueinander in gewissem Maße zulassen. So wird eine günstige und effektive Übertragung der Drehbewegung, ohne Übertragung der schädlichen Radial- und Axialbewegungen 15 erreicht.

Vorzugsweise weist der montierte Elastomerkörper 75 eine hohe Steifigkeit in Umfangsrichtung 14 auf, und besonders vorzugsweise eine sehr geringe Steifigkeit bzw. eine hohe Elastizität in Axialrichtung 12 und/oder in Radialrichtung 13 auf. So wäre die Abstützung in Radialrichtung 13 und die Kraftübertragung in Umfangsrichtung 14 direkt und verlässlich sein, die Kompensationsfähigkeit in Axialrichtung 12 für Bewegungen 15 trotzdem hoch.

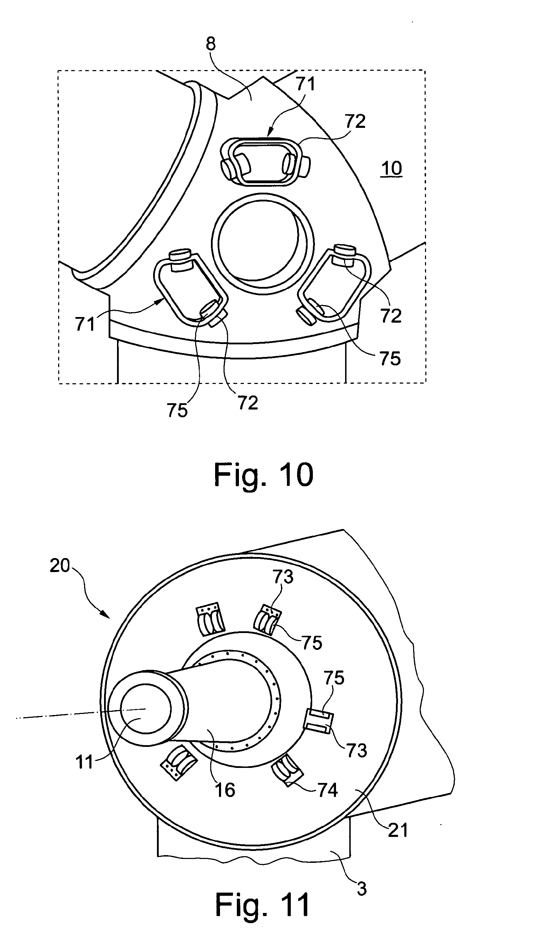

In Fig. 10 ist zu erkennen, dass die Abstützmittel 71 auf der dem Getriebe 20 zugewandten Seite der Nabe 8 als Vorsprunge 71 ausgebildet sind, an welchen die Elastomerkörper 75 befestigt sind. Entsprechend sind auf der Getriebeglocke 21, oder auch Generatorglocke, als Abstützmittel 73 dienende Ausnehmungen 73 vorgesehen. In diese Ausnehmungen 73 greifen die Vorsprünge 71 der Nabe 8 in Axialrichtung 12 ein.

Um eine günstige Fertigung der einzelnen Komponenten zu ermöglichen, ist wie in Fig. 9 eine eigenständige Ausprägung des Planetenträgers 78 vorzuschlagen. Dieser besteht im Wesentlichen aus einer Scheibe 77, welche wiederum die Lagerzapfen 76 der Planetenräder 25 trägt. Diese Scheibe 77 kann sehr präzise und kostengünstig durch Dreh- und/oder Fräsprozesse hergestellt werden und folglich mit Schraubverbindungen an den Maschinenträger 3 montiert werden. Da die Scheibe 77 des Planetenträgers 78 auch die Verbindungsstellen 18 der Rotorachse 11 aufnimmt, vornehmlich durch Schraubverbindungen, legt die Scheibe 77 und die Achsabstände der einzelnen Zahnräder des Getriebes 20 fest, welche hochgradig relevant für das Funktionieren und die Lebensdauer des Getriebes 20 sind. Zwischen der Scheibe 77 des Planetenträgers 78 und dem Gehäuse 24 des Hohlrads 22 sind Dichtungsmittel 79 angeordnet.

Weiterhin zeigt Fig. 9, jedoch auch in allen anderen Ausführungen denkbar, an der Rotorachse 11 eine Übertragungsvorrichtung 80 zur Übertragung von elektrischer Energie zwischen der zur Rotorachse 11 relativ rotierenden Nabe 8. Diese als Schleifringvorrichtung ausgebildete Vorrichtung 80 umfasst einen oder mehrere mit der Nabe 8 drehenden Abnehmer 81 und den mit der Nabe 8 verbundenen Schleifring 82. Der mehrpolige Schleifring 82 ist über Kabel mit dem Stromnetz des Maschinenhauses 2 und zur Übertragung von Steuersignalen mit der Steuerung der Windturbine 1 verbunden.

Fig. 13 führt eine letzte Ausführung der Verbindungsmittel 90 an. Dabei sind die Verbindungsmittel 90 als elastisch wirkende oder flexible Bauteilkomponenten oder Baugruppen, z. B. als mindestens eine Strebe 91 ausgeführt, die eine translatorische und kippende Bewegungen 15 zwischen dem Rotor 7 und den Abtriebsmitteln 20, 21, 43, 44 in sich aufnehmen und kompensieren können. Die Streben 91 sind an ihren Enden beweglich mit der Nabe 8 derart verbunden und an einem anderen Ende mit den Abtriebsmitteln 20, 21, 43, 44 derart verbunden, dass Umfangskräfte durch Zug oder Druck zwischen der Nabe 8 und den Abtriebsmitteln 20, 21, 43, 44 übertragbar sind, aber Radial-, Axial- und/oder Kippbewegungen 15 der Nabe 8 durch ein Auslenken der Strebe 91 an Nabe 8 und/oder an den Abtriebsmitteln 20, 21, 43, 44 kompensiert werden. Die Streben 91 können stangenförmig ausgeprägt sein. Weiterhin umfassen die Verbindungsmittel 90 weitere Dämpfungsmittel 92, die zwischen der Strebe 91 und der Nabe 8 und/oder zwischen der Strebe 91 und den Abtriebsmitteln 20, 21, 43, 44 wirksam angeordnet sind. Dabei können zwischen der Strebe 91 und der Nabe 8 bzw. den Abtriebsmitteln 20, 21, 43, 44 Kugel- und/oder Stangengelenke 93 vorgesehen sein, die Elastomerelemente 92 aufweisen, um die Auslenkung zu ermöglichen und dabei auch dämpfend zu wirken.

Die in den beschriebenen Ausführungsbeispielen offenbarten Merkmalskombinationen sollen nicht limitierend auf die Erfindung wirken, vielmehr sind auch die Merkmale der unterschiedlichen Ausführungen miteinander kombinierbar.

**Bezugszeichenliste**

| | | | |
|---|---|---|---|
| | | 42 | Nuten |
| 1 | Windturbine | 43 | Großgenerator |
| 2 | Maschinenhaus | 44 | Generatorglocke |
| 3 | Maschinenträger | 45 | Achsstumpf |
| 4 | Turm | 46 | Momentenlager |
| 5 | Azimutlager | 47 | Generatorgehäuse |
| 6 | Achse | 48 | Dichtungsmitteln |
| 7 | Rotor | 49 | Generatorrotor |
| 8 | Nabe | 50 | Stator |
| 9 | Zugangsöffnung | 51 | Rotorachse |
| 10 | Rotorblatt | 52 | Luftspalt |
| 11 | Rotorachse | 53 | Lager |
| 12 | Axialrichtung | 60 | Verbindungsmittel |
| 13 | Radialrichtung | 61 | Buchse |
| 14 | Umfangsrichtung | 62 | Elastomerkörper |
| 15 | Bewegung | 63 | Bolzen |
| 16 | Lauffläche | 70 | Verbindungsmittel |
| 17 | Spitze | 71 | Abstützmittel |
| 18 | Verbindungsstelle | 72 | Abstützfläche |
| 19 | Übergangsbereich | 73 | Abstützmittel |
| 20 | Getriebe | 74 | Abstützfläche |
| 21 | Getriebeglocke | 75 | Elastomerkörper |
| 22 | Hohlrad | 76 | Lagerzapfen |
| 23 | Verzahnung | 77 | Scheibe |
| 24 | Gehäuse | 78 | Planetenträger |
| 25 | Planetenrad | 79 | Lager |
| 26 | Verzahnung | 80 | Lager |
| 27 | Lagerzapfen | 81 | Lager |
| 28 | Planetenträger | 82 | Dichtungsmittel |
| 29 | Sonnenrad | 83 | Übertragungsvorrichtung |
| 30 | Verzahnung | 84 | Abnehmer |
| 31 | Abtriebswelle | 85 | Schleifring |
| 32 | Generator | 90 | Verbindungsmittel |
| 33 | Bremsscheibe | 91 | Strebe |
| 34 | Lager | 92 | Dämpfungsmittel |
| 35 | Lager | 93 | Gelenk |
| 36 | Lager | L_{X} | Axialversatz |
| 40 | Verbindungsmittel | Sₐ | axiale Stärke |
| 41 | Elastomerkörper | Sᵣ | radiale Stärke |

## Patentansprüche

1. Windturbine (1) mit einem Rotor (7), einer im Wesentlichen horizontalen Rotorachse (11; 51), mit einem Maschinenträger (3), mit Abtriebsmitteln (20, 21) zum Abführen der Rotationsenergie des Rotors (7),
- wobei die die Abtriebsmittel (20) als Hohlrad (20) oder Planetenträger eines Getriebes (20) ausgebildet sind,
- wobei die Rotorachse (11; 51) drehfest mit dem Maschinenträger (3) verbunden ist,
- der Rotor (7) eine Nabe (8) und mindestens ein daran befestigbares Rotorblatt (10) aufweist,
- drehbar auf der Rotorachse (11; 51) gelagert ist,
- und im Wesentlichen drehfest mit den Abtriebsmitteln (20, 21) verbunden ist,
**dadurch gekennzeichnet, dass** zwischen den Abtriebsmitteln (20, 21) und dem Rotor (7) entkoppelnde Verbindungsmittel (40; 60; 70; 90) derart ausgebildet sind und derart wirksam angeordnet sind, so dass ein Übertragen von Radial-, Axial- und/oder Kippbewegungen (15), von dem Rotor (7) auf die Abtriebsmittel (20, 21) im Wesentlichen verhindert wird.

2. Windturbine (1) nach Anspruch 1, **dadurch gekennzeichnet, dass** das Getriebe (20) Planetenträger (28; 78), Planetenräder (25), ein Sonnenrad (29), eine Abtriebswelle (31) umfasst, wobei das Hohlrad (22) im Wirkeingriff mit Planetenrädern (25) ist, die Planetenräder (25) mit einem Sonnenrad (29) zusammenwirken, und das Sonnenrad (29) mit einer Abtriebswelle (31) verbunden ist, wobei die Planetenräder (25) auf einem Planetenträger (28; 78) gelagert sind, welcher drehfest bezüglich des Maschinenträgers (3) an der Windturbine (1) vorgesehen ist.

3. Windturbine (1) nach Anspruch 1 oder 2, **dadurch gekennzeichnet, dass** die Abtriebsmittel (20, 21) direkt über ein Lager (46; 81) auf der Rotorachse (11; 51) drehbar gelagert ist.

4. Windturbine (1) nach Anspruch 3, **dadurch gekennzeichnet, dass** der Rotor (7) zumindest teilweise über die Abtriebsmittel (20, 21) auf der Rotorachse (11) gelagert ist.

5. Windturbine (1) nach Anspruch 3, **dadurch gekennzeichnet, dass** der Rotor (7) über mindestens ein Lager (46; 81) in unabhängiger Weise von den Abtriebsmittel (20, 21) auf der Rotorachse (11; 51) gelagert ist.

6. Windturbine (1) nach einem der voran stehenden Ansprüche, **dadurch gekennzeichnet, dass** die Verbindungsmittel (90) als mindestens eine Strebe (91) ausgebildet sind, und diese Strebe (91) an einem Ende beweglich mit der Nabe (8) derart verbunden ist und an einem anderen Ende mit den Abtriebsmitteln (20, 21) derart verbunden ist, dass Umfangskräfte durch Zug oder Druck zwischen der Nabe (8) und den Abtriebsmitteln (20, 21) übertragbar sind, aber Radial-, Axial- und/oder Kippbewegungen (15) der Nabe (8) durch ein Auslenken der Strebe (91) an Nabe (8) und/oder an den Abtriebsmitteln (20, 21) kompensiert werden.

7. Windturbine (1) nach einem der voran stehenden Ansprüche, **dadurch gekennzeichnet, dass** die Verbindungsmittel (90) Dämpfungsmittel (92) umfassen, die zwischen der Strebe (91) und der Nabe (8) und/oder zwischen der Strebe (91) und den Abtriebsmitteln (20, 21) wirksam angeordnet sind.

8. Windturbine (1) nach einem der voran stehenden Ansprüche, **dadurch gekennzeichnet, dass** die Verbindungsmittel (40; 60; 70; 90) elastische Bauteilkomponenten (41; 62; 75; 92) umfassen.

9. Windturbine (1) nach Anspruch 8, **dadurch gekennzeichnet, dass** die Nabe (8) und die Abtriebsmitteln (21; 44) jeweils eine korrespondierende Abstützfläche (72, 74) aufweisen, wobei die Abstützflächen (72, 74) zu einem Teil in Axialrichtung (12) verlaufen und sich in Umfangsrichtung (14) derart hinterschneiden, so dass die Abstützflächen (72, 74) geeignet sind Umfangskräfte zwischen Nabe (8) und den Abtriebsmitteln (21; 44) zu übertragen.

10. Windturbine (1) nach Anspruch 9, **dadurch gekennzeichnet, dass** Abstützflächen (72, 74) im Wesentlichen in Axialrichtung (12) verlaufen.

11. Windturbine (1) nach einem der voran stehenden Ansprüche, **dadurch gekennzeichnet, dass** die elastischen Bauteilkomponenten (75) zwischen den Abstützflächen (72, 74) angeordnet sind.

12. Windturbine (1) nach einem der voran stehenden Ansprüche, **dadurch gekennzeichnet, dass** mindestens zwei Verbindungsmittel (40; 60; 70; 90) gleichmäßig über den Umfang verteilt zwischen Rotor (8) und Abtriebsmittel (21; 44) vorgesehen sind.

13. Windturbine (1) nach einem der voran stehenden Ansprüche, **dadurch gekennzeichnet, dass** die Verbindungsmittel (60) als Buchse (61) mit einem Elastomerkörper (62) und einem Bolzen (63) ausgebildet sind.

## Claims

1. Wind turbine (1) with a rotor (7), a substantially horizontal rotor shaft (11; 51), with a machine frame (3), with output means (20, 21) for dissipating the rotation energy of the rotor (7),
- wherein the output means (20) are formed as ring gear (22) or planet carrier of a gear box (20)
- wherein the rotor shaft (11; 51) is connected in a rotation-fixed manner to the machine frame (3),
- the rotor (7) has a hub (8) and at least one rotor blade (10) attachable thereto,
- is rotatably supported on the rotor shaft (11; 51),
- and is connected substantially in a rotation-fixed manner to the output means (20, 21),
**characterized in that** decoupling connecting means (40 60; 70; 90) are effectively formed and effectively arranged between the output means (20, 21) and the rotor (7) in order to substantially prevent the transmitting of radial, axial and/or tilting motions (15) from the rotor (7) onto the output means (20, 21).

2. Wind turbine (1) according to claim 1, **characterized in that** the ring gear (22) is in operative engagement with planet wheels (25) which cooperate with a sun wheel (29), and the sun wheel (29) is connected with an output shaft (31), wherein planet wheels (25) are supported on a planet carrier (28; 78), which is provided rotation-fixedly relative to the machine frame (3) on the wind turbine (1).

3. Wind turbine (1) according to claim 1 or 2, **characterized in that** the output means (20, 21; 43, 44) is rotatably supported on the rotor shaft (11; 51) directly via a bearing (46; 81).

4. Wind turbine (1) according to claim 3, **characterized in that** the rotor (7) is at least partly via the output means (20, 21) supported on the rotor shaft (11).

5. Wind turbine (1) according to claim 3, **characterized in that** the rotor (7) is supported on the rotor shaft (11; 51) via at least one bearing (46; 81) in a manner independent from the output means (20, 21).

6. Wind turbine (1) according to one of the preceding claims, **characterized in that** the connecting means (90) are formed as at least one strut (91), and this strut (91) is movably connected to the hub (8) at one end in such a manner and to the output means (20, 21) at the other end in such a manner, that circumferential forces are transferable by pull or pressure between the hub (8) and the output means (20, 21), but the radial, axial and/or tilting motions (15) of the hub (8) are compensated by a deflection of the strut (91) on hub (8) and/or on the output means (20, 21).

7. Wind turbine (1) according to one of the preceding claims, **characterized in that** the connecting means (90) comprise damping means (92), which are effectively disposed between the strut (91) and the hub (8) and/or between the strut (91) and the output means (20, 21).

8. Wind turbine (1) according to one of the preceding claims, **characterized in that** the connecting means (40; 60; 70; 90) comprise elastic components (41; 62; 75; 92).

9. Wind turbine (1) according to claim 8, **characterized in that** the hub (8) and the output means (21; 44) each have a corresponding supporting surface (72, 74), wherein the supporting surfaces (72, 74) partially extend in the axial direction (12) and are undercut in the circumferential direction (14) in such a way, that the supporting surfaces (72, 74) are suitable to transfer circumferential forces between the hub (8) and the output means (21; 44).

10. Wind turbine (1) according to claim 9, **characterized in that** supporting surfaces (72, 74) extend substantially in the axial direction (12).

11. Wind turbine (1) according to one of the preceding claims, **characterized in that** the elastic components (75) are arranged between the supporting surfaces (72, 74).

12. Wind turbine (1) according to one of the preceding claims, **characterized in that** at least two connecting means (40; 60; 70; 90) are provided between the rotor (8) and output means (21; 44) in a way of uniformly distributing over the circumference.

13. Wind turbine (1) according to one of the preceding claims, **characterized in that** the connecting means (60) are formed as bush (61) with an elastomeric body (62) and a bolt (63).

## Revendications

1. Une éolienne (1) avec un rotor (7), un arbre de transmission essentiellement horizontal (11; 51), avec un châssis (3), avec des dispositifs de sortie (20, 21) pour dissiper l'énergie de rotation du rotor (7),
- dans lequel les dispositifs de sortie (20) sont constitués d'une couronne intérieurement dentée (22) ou d'un porte-satellite de boite de vitesse (20)
- dans lequel l'arbre d'entraînement (11; 51) est connecté en rotation fixe au châssis (3),
- le rotor (7) comporte un moyeu (8) et au moins une pale de rotor (10) pouvant être fixé à celui-ci,
- est supporté de manière rotative par l'arbre de transmission (11; 51)
- et est relié essentiellement en rotation fixe aux moyens de sortie (20, 21)
**Caractérisée en ce qu'**entre les dispositifs de sortie (20, 21) et le rotor (7), le découplage des systèmes de connexion (40; 60; 70; 90) sont formées et disposées de manière efficace, de sorte qu'une transmission radiale, axiale et / ou des mouvements de basculement (15) du rotor (7) vers les moyens de sortie (20, 21) sont pour l'essentiel empêchés.

2. Eolienne (1) selon la revendication 1, **caractérisée en ce que** la couronne intérieurement dentée (22) soit engagé avec les engrenages satellite (25) qui coopère avec le pinion (soleil) (29) et le soleil (29) est relié à un arbre de sortie (31), dans lequel les engrenages satellites (25) sont supportés par un porte-satellites (28; 78), qui est prévu en rotation de façon fixe par rapport au châssis (3) de l'éolienne (1).

3. Turbines éoliennes (1) selon la revendication 1 ou 2, **caractérisées en ce que** les dispositifs de sortie (20, 21; 43, 44) soient supportés de manière rotative par l'arbre de rotor (11; 51) directement par l'intermédiaire d'un roulement (46; 81).

4. Eoliennes (1) selon la revendication 3, **caractérisée en ce que** le rotor (7) est au moins supporté en partie, par l'intermédiaire des dispositifs de sortie (20, 21), par l'arbre de transmission (11).

5. Eolienne (1) selon la revendication 3, **caractérisée en ce que** le rotor (7) est supporté par l'arbre de transmission (11; 51) par l'intermédiaire d'au moins un roulement (46; 81) et d'une manière indépendante des dispositifs de sortie (20, 21).

6. Eolienne (1) selon l'une quelconque des revendications précédentes, **caractérisée en ce que** les systèmes de connections (90) sont réalisés sous la forme d'au moins un etai (91), et cet étai (91) est reliée de façon mobile au moyeu (8) à une extrémité et dans les moyens de sortie (20, 21) à l'autre extrémité d'une manière telle, que les forces circonférentielles sont transférables par traction ou compression entre le moyeu (8) et les moyens de sortie (20, 21), mais les mouvements radiaux, axiaux et / ou de basculement (15) du moyeu (8) sont compensés par une déviation de l'étai (91) sur le moyeu (8) et / ou à la sortie des moyens (20, 21).

7. Eoliennes (1) selon l'une quelconque des revendications précédentes, **caractérisée en ce que** les systèmes de connections (90) comprennent des moyens d'amortissement (92), qui sont effectivement disposés entre l'étai (91) et le moyeu (8) et / ou entre l'étai (91) et le moyen de sortie (20, 21).

8. Eoliennes (1) selon l'une quelconque des revendications précédentes, **caractérisée en ce que** systèmes de connections (40; 60; 70; 90) comprennent des éléments élastiques (41; 62; 75; 92).

9. Eolienne (1) selon la revendication 8, **caractérisée en ce que** le moyeu (8) et les dispositifs de sortie (21; 44) présentent chacun une surface correspondante d'appui (72, 74), ou ces surfaces d'appui (72, 74) se prolongent partiellement dans la direction axiale (12) et sont dégagé dans la direction circonférentielle (14) de telle manière que les surfaces d'appui (72, 74) sont adaptées pour transférer des forces circonférentielles entre le moyeu (8) et les dispositifs de sortie (21; 44).

10. Eolienne (1) selon la revendication 9, **caractérisée en ce que** des surfaces d'appui (72, 74) s'étendent essentiellement dans la direction axiale (12).

11. Eolienne (1) selon l'une quelconque des revendications précédentes, **caractérisée en ce que** les éléments élastiques (75) sont disposés entre les surfaces d'appui (72, 74).

12. Eolienne (1) selon l'une quelconque des revendications précédentes, **caractérisée en ce qu'**au moins deux systèmes de connections (40; 60; 70; 90) sont prévus entre le rotor (8) et les dispositifs de sortie (21; 44) placé uniformément sur la circonférence.

13. Eolienne (1) selon l'une quelconque des revendications précédentes, **caractérisée en ce que** les systèmes de connections (60) soient de type Bush douille (61) avec un corps en élastomère (62) et un boulon (63).
